(19) Europäisches Patentamt
European Patent Office
Office européen des brevets

(11) **EP 2 505 040 B1**

(12) **EUROPÄISCHE PATENTSCHRIFT**

(45) Veröffentlichungstag und Bekanntmachung des Hinweises auf die Patenterteilung:
**01.04.2015 Patentblatt 2015/14**

(21) Anmeldenummer: **10785376.4**

(22) Anmeldetag: **15.11.2010**

(51) Int Cl.:
***H05B 41/288*** (2006.01)

(86) Internationale Anmeldenummer:
**PCT/EP2010/067449**

(87) Internationale Veröffentlichungsnummer:
**WO 2011/064116 (03.06.2011 Gazette 2011/22)**

(54) **SCHALTUNGSANORDNUNG UND VERFAHREN ZUM BETREIBEN EINER ENTLADUNGSLAMPE**

CIRCUIT ASSEMBLY AND METHOD FOR OPERATING A DISCHARGE LAMP

CIRCUIT ET PROCÉDÉ PERMETTANT DE FAIRE FONCTIONNER UNE LAMPE À DÉCHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2009 DE 102009054377**

(43) Veröffentlichungstag der Anmeldung:
**03.10.2012 Patentblatt 2012/40**

(73) Patentinhaber: **OSRAM GmbH**
**80807 München (DE)**

(72) Erfinder:
• **BRAUN, Alois**
**86633 Neuburg/Donau (DE)**
• **LIMMER, Walter**
**81825 München (DE)**
• **SCHMIDL, Maximilian**
**82049 Pullach (DE)**

(56) Entgegenhaltungen:
**EP-A2- 1 793 655      DE-A1-102008 015 645**
**US-A- 6 020 691      US-A1- 2001 020 830**

## Beschreibung

## Technisches Gebiet

Die Erfindung betrifft eine Schaltungsanordnung und ein Verfahren zum Betreiben einer Entladungslampe, wobei die Schaltungsanordnung die Entladungslampe mit einer niederfrequenten und einer hochfrequenten Spannung betreiben kann.

## Hintergrund

Die Erfindung betrifft eine Schaltungsanordnung und ein Verfahren zum Betreiben einer Entladungslampe nach der Gattung des Hauptanspruchs.

Herkömmliche Schaltungsanordnungen zum Betreiben von Entladungslampen legen kurz nach dem Starten der Entladungslampe, im Folgenden auch Lampe genannt, eine optimierte Leistung an die Lampe an, um sie schnell aufzuheizen und den stationären Brennzustand ohne Vorschädigung zu erreichen. Diese Problematik betrifft vor allem, aber nicht nur, Hochdruckentladungslampen, die bei Betrieb mit Nennleistung oft mehrere Minuten benötigen, bis der stabile Brennzustand erreicht ist. Mit stabilem Brennzustand ist in diesem Zusammenhang der Betriebszustand gemeint, bei dem das Entladungsgefäß der Entladungslampe bei Betrieb mit Nennleistung eine gleichmäßige Temperatur hat.

Vor allem Hochdruckentladungslampen werden gerne mit einem niederfrequenten rechteckförmigen Lampenstrom betrieben, um die Problematik der akustischen Resonanzen im Brennergefäß, im Folgenden auch Brenner genannt, bei höheren Frequenzen zu umgehen. Zum Speisen der Gasentladungslampe wird oftmals eine Vollbrückenanordnung verwendet, die gleichzeitig als tiefsetzender Spannungswandler arbeitet, um die höhere Eingangsgleichspannung auf die Lampenspannung herunterzusetzen. Dazu arbeitet eine Halbbrückenanordnung der Vollbrücke mit einem höherfrequenten, meist pulsweitenmodulierten Signal, mit dem das niederfrequente Rechtecksignal moduliert wird. Dieses Signal wirkt mit einer Tiefsetzerdrossel und einer Filterkapazität aufweisend mindestens einen Kondensator zusammen, um die Spannung herabzusetzen. Da kurz nach der Zündung ein möglichst konstanter Strom an die Lampe angelegt werden sollte, um ein schnelles Hochlaufen zu gewährleisten, sollte der tiefsetzende Spannungswandler in der Vollbrücke in dieser Zeit im nichtlückenden Betrieb laufen. Der an die Lampe angelegte Strom liegt deswegen normalerweise in einem, für diesen Lampentyp spezifizierten Bereich. Im nichtlückenden Betrieb wird die Tiefsetzerdrossel in einem Zyklus nicht komplett entladen. Deswegen ist hier kein ZVS (Zero Voltage switching, Nullspannungsschalten) möglich, und es treten hier erhöhte Schaltverluste auf. Der nichtlückende Betrieb ist aber notwendig, da sonst die Arbeitsfrequenz aufgrund der niedrigen Lampenspannung in dieser Phase auf unter 20kHz absinken würde, und bei einer Frequenz größer 20 kHz nicht der geforderte Strom an die Hochdruckentladungslampe angelegt werden kann. Eine Arbeitsfrequenz kleiner als 20 kHz ist aufgrund der Hörschwelle des Menschen aber nicht möglich. Erst mit zunehmender Temperatur des Brenners steigt die Lampenspannung an und der tiefsetzende Spannungswandler kann dann im effizienteren lückenden Betrieb gefahren werden.

Aus der DE 10 2008 015 645 A1 ist eine Schaltungsanordnung zum Zünden einer Gasentladungslampe bekannt, die eine solche Vollbrücke mit einem tiefsetzenden, pulsweitenmodulierten Halbbrückenzweig offenbart. Die Schaltungsanordnung schaltet direkt nach dem Zünden der Entladungslampe in diesen Modus, und regelt die an die Entladungslampe abgegebene Leistung über eine Pulsweitenmodulation.

Aus der US 2001/0020830 A1 ist eine Schaltungsanordnung zum Betreiben einer Entladungslampe bekannt, welche ebenfalls eine Vollbrücke mit zwei Halbbrücken aufweist, wobei eine der Halbbrücken mit einer niederfrequenten Spannung arbeitet, und die andere Halbbrücke mit einer hochfrequenten Spannung moduliert wird.

Aus der US 6020691 A ist eine Schaltungsanordnung zum Betreiben einer Entladungslampe bekannt, die eine Halbbrückenanordnung aufweist, welche zum zünden mit einer hochfrequenten Spannung betrieben wird, und nach der Zündung mit einer niederfrequenten Spannung betrieben wird, auf die eine hochfrequente Spannung aufmoduliert ist.

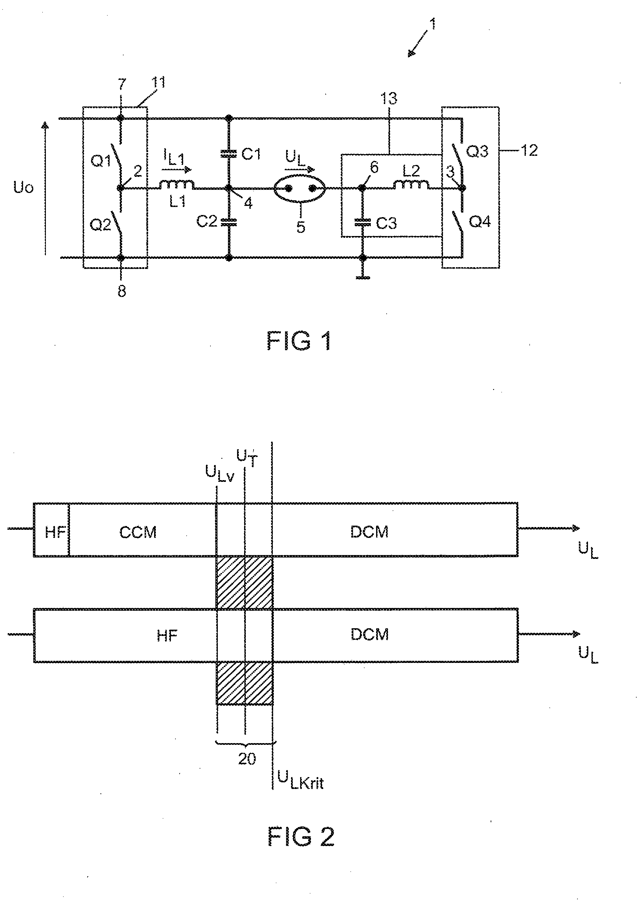

In einer anderen herkömmlichen Schaltungsanordnung, die in **Fig. 1** dargestellt ist, wird die Entladungslampe mit einer Resonanzzündung gestartet. Die Schaltungsanordnung weist einen hier nicht gezeigten Spannungswandler, der eine Netzspannung in eine Eingangsgleichspannung $U_0$ umwandelt und eine Vollbrückenanordnung 1 auf, deren Halbbrückenmittelpunkte 2, 3 durch eine Serienschaltung zweier Drosseln L1, L2 und der Gasentladungslampe 5 verbunden sind. An den Verbindungspunkt der ersten Drossel L1 mit der Gasentladungslampe 5 sind zwei Kondensatoren C1, C2 geschaltet, der erste Kondensator C1 an die positive Versorgungsspannung 7, der zweite Kondensator C2 an die Schaltungsmasse 8. An den Verbindungspunkt der zweiten Drossel L2 mit der Gasentladungslampe 5 ist ein dritter Kondensator C3 nach Schaltungsmasse 8 geschaltet. Um die Gasentladungslampe nun zu starten und bis zur Nennleistung hochzufahren wird bei dieser herkömmlichen Schaltungsanordnung ein dreistufiges Verfahren durchgeführt.

Im ersten Schritt wird die Gasentladungslampe mit einer durch eine Resonanzüberhöhung erzeugten hochfrequenten Hochspannung gestartet. Dazu bleiben die Schalter Q1, Q2 der ersten Halbbrücke 11 offen, und die Schalter Q3, Q4 der zweiten Halbbrücke 12 werden mit einem hochfrequenten Signal angesteuert. Die Anregungsfrequenz ist dabei auf die Resonanzfrequenz des Resonanzkreises 13, der aus der zweiten Drossel L2 und dem dritten Kondensator C3 besteht, abgestimmt. Mit dieser hochfrequenten Hochspannung wird die Lampe gestartet. Die durch die Resonanz erzeugte hochfrequente Spannung wird auch nach dem Lampenstart für eine vorbestimmte Zeit, üblicherweise ca. 1s, an die Entladungslampe angelegt, um die Entladungslampe schnell in einen stabilen Brennzustand über zu führen. Nach Ablauf dieser Zeit wird dann im zweiten Schritt ein niederfrequenter Rechteckbetrieb gefahren, in dem der tiefsetzende Spannungswandler der Vollbrückenanordnung im nichtlückenden Betrieb läuft, um den geforderten Strom an die Lampe anzulegen. Erst nach einiger Zeit, wenn die Temperatur des Brenners und damit die Lampenspannung $U_L$ genügend hoch ist, wird in einem dritten Schritt der tiefsetzende Spannungswandler auf den energieeffizienten lückenden Betrieb umgeschaltet.

Um den nichtlückenden Betrieb fahren zu können, müssen aber die Bauteile der Schaltungsanordnung beziehungsweise der Vollbrückenanordnung 1 wesentlich größer dimensioniert werden, da in diesem Modus die Belastungen deutlich höher sind. Dies wiegt umso schwerer, da dieser Betriebsmodus nur für eine kurze Zeit nach dem Lampenstart gefahren wird. Somit wird nur für einen verschwindend kleinen Bruchteil der Gesamtbetriebsdauer eine Schaltungsanordnung benötigt, deren Bauteile für den überwiegenden Teil der Betriebszeit zu groß, zu schwer und damit zu kostspielig sind.

## Aufgabe

Es wird eine Schaltungsanordnung und ein Verfahren zum Betreiben einer Entladungslampe bereitgestellt, wobei die Schaltungsanordnung die Entladungslampe mit einer niederfrequenten und einer hochfrequenten Spannung betreiben kann, und die Bauteile der Schaltungsanordnung für den stationären Betrieb dimensioniert sein können.

## Zusammenfassung

Es wird eine Schaltungsanordnung gemäß Anspruch 1 zum Betreiben einer Entladungslampe bereitgestellt, aufweisend eine Vollbrückenanordnung, die die Entladungslampe speist, wobei die Schaltungsanordnung die Entladungslampe mit einer niederfrequenten und einer hochfrequenten Spannung betreiben kann, und die Schaltungsanordnung ausgebildet ist:

- die Entladungslampe direkt nach dem Lampenstart mit einer hochfrequenten Spannung zu betreiben, und

- die Entladungslampe oberhalb einer vorbestimmten Lampenspannung mit einer niederfrequenten Spannung zu betreiben, wobei die Vollbrückenanordnung dabei immer im lückenden Betrieb arbeitet. Mit dieser Maßnahme können die Bauteile der gesamten Schaltungsanordnung auf einen lückenden Betrieb hin dimensioniert werden und fallen somit klein und kostengünstig aus.

Es wird ferner ein Verfahren gemäß Anspruch 9 zum Betreiben einer Entladungslampe mit einer Schaltungsanordnung, die eine Vollbrückenanordnung zum Speisen der Entladungslampe aufweist, bereitgestellt, wobei die Schaltungsanordnung die Entladungslampe mit einer niederfrequenten und einer hochfrequenten Spannung betreiben kann, und:

- die Entladungslampe direkt nach dem Lampenstart mit einer hochfrequenten Spannung betrieben wird, und

- die Entladungslampe oberhalb einer vorbestimmten Lampenspannung mit einer niederfrequenten Spannung betrieben wird, wobei die Vollbrückenanordnung dabei immer im lückenden Betrieb arbeitet.

Im Hochlauf kurz nach dem Start wird die Entladungslampe (5) mit einem Lampenstrom $I_L$ betrieben. Für den Lampenstrom im Hochlauf $I_L$ gilt dabei beispielsweise folgende Beziehung: $1{,}0 * I_{Nenn} < I_L < 2{,}0 * I_{Nenn}$, wobei $I_{Nenn}$ der Lampenstrom im Nennbetrieb, also im eingeschwungenen Zustand bei Nennleistung der Gasentladungslampe ist. Anders ausgedrückt bedeutet dies, dass die Schaltungsanordnung beispielsweise derart eingerichtet ist, dass der Lampenstrom gemäß obiger Vorschrift bereitgestellt wird. Beispielsweise kann für den Lampenstrom $I_L$ im Hochlauf folgende Beziehung angegeben werden: $1{,}3 * I_{Nenn} < I_L < 1{,}8 * I_{Nenn}$. Wird der Lampenstrom in diesem Bereich gehalten, so ist ein sicherer und schneller Hochlauf der Gasentladungslampe gewährleistet, ohne die Elektroden der Gasentladungslampe thermisch zu überlasten und damit zu schädigen. Das Umschalten vom hochfrequenten Betrieb in den niederfrequenten lückenden Betrieb kann dabei frühestens bei Erreichen einer vorbestimmten Lampenspannung $U_{Lv}$ erfolgen. Die vorbestimmte Lampenspannung $U_{Lv}$ kann dabei durch folgende Beziehung berechnet werden:

$$U_{Lv} = \frac{I_L \cdot 2 \cdot L_1 \cdot f_{min}}{1 - D} \text{, wobei L1 die Tiefsetzer-}$$

drossel der Vollbrückenanordnung ist, D das Tastverhältnis der Vollbrückenanordnung im tiefsetzenden Betrieb ist, sowie $f_{min}$ die minimale Frequenz des tiefsetzenden Betriebes ist.

Die Schaltungsanordnung kann dazu ausgebildet sein, die Lampenspannung (beispielsweise direkt) im hochfrequenten Betrieb zu messen. Dies hat den Vorteil einer einfacheren Steuerung. Die Lämpenspannung ist aber schwieriger zu messen, dadurch bleibt bei vertretbarem Aufwand die Messung vergleichsweise ungenau. Eine genauere Messung ist möglich, wenn die Schaltungsanordnung ausgebildet ist, die Lampenspannung in einer (beispielsweisen kurzen) periodischen niederfrequenten Phase zu messen, die in die hochfrequente Betriebsphase eingefügt wird. Dazu ist allerdings eine aufwendigere Steuerung notwendig. Bei heutigen digital gesteuerten Schaltungsanordnungen ist dies aber rein in Software zu bewerkstelligen und somit kostenneutral oder sehr kostengünstig zu implementieren.

**Kurze Beschreibung der Zeichnung(en)**

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:

Fig. 1 eine Vollbrückenanordnung, die eine Entladungslampe mit einer Resonanzzündung startet und die Lampenleistung mit einem tiefsetzenden Spannungswandler regeln kann,

Fig. 2 ein schematisches Diagramm der Betriebsmoden der Vollbrückenanordnung in Abhängigkeit von der Lampenspannung,

Fig. 3 ein Lampenspannungsdiagramm über der Zeit für eine Ausführungsform mit einer besonderen Lampenspannungsmessung.

**Bevorzugte Ausführung der Erfindung**

Fig. 1 zeigt die Eingangs schon beschriebene Schaltungsanordnung, wie sie von der prinzipiellen Topologie her auch für herkömmliche Geräte verwendet wird. Eine Schaltungsanordnung in dieser Topologie ist für eine Resonanzzündung ausgelegt.

Wie Eingangs schon erwähnt, wird zum Anlegen einer hochfrequenten Spannung an eine Gasentladungslampe 5 eine zweite Halbbrücke 12 verwendet, während Schalter Q1, Q2 einer ebenfalls vorgesehenen ersten Halbbrücke 11 offen bleiben. Der Resonanzkreis 13, aufweisend oder bestehend aus einer zweiten Drossel L2 und einem dritten Kondensator C3, dient dabei der Spannungserhöhung, die über die Anregungsfrequenz eingestellt werden kann. Ein erster Kondensator C1 und ein zweiter Kondensator C2 dienen in dieser Betriebsart als Halbbrückenrückschlusskondensatoren, die den Stromkreis durch die Lampe 5 schließen. Zwischen dem Resonanzkreis 13 und den Halbbrückenrückschlusskondensatoren C1, C2 ist die Gasentladungslampe 5 angeordnet. Durch entsprechende Frequenzeinstellung der zweiten Halbbrücke 12 wird der Resonanzkreis 13 stark angeregt, bis ein elektrischer Durchbruch in der Gasentladungslampe 5 stattfindet. Sobald sich ein Entladungsbogen im Brenner etabliert hat, wird die Frequenzregelung der zweiten Halbbrücke 12 derart gefahren, dass sich ein vorbestimmter Strom $I_L$ durch die Gasentladungslampe 5 einstellt. Für den Lampenhochlauf, also den Zeitraum bis die Gasentladungslampe 5 ihre Betriebstemperatur erreicht hat und mit ihrer Nennleistung $P_{Nenn}$ beziehungsweise ihrem Nennstrom $I_{Nenn}$ betrieben wird, ergeben sich folgende Einschränkungen, um die Gasentladungslampe 5 nicht zu überlasten und den Lampenbetrieb für den Menschen möglichst geräuschlos zu gestalten:

- Der Lampenstrom sollte sich bespielsweise in folgendem Bereich bewegen: $1,0*I_{Nenn}<I_L<2,0*I_{Nenn}$, beispielswiese in folgendem Bereich: $1,3*I_{Nenn}<I_L<1,8*I_{Nenn}$.
- Die Lampenleistung $P_L$ der Gasentladungslampe 5 sollte dabei unterhalb bis maximal der Nennleistung $P_{Nenn}$ betragen: $P_L<=P_{Nenn}$.
- Um den Lampenbetrieb für den Menschen möglichst leise zu gestalten sollte die minimale Frequenz, mit der die zweite Halbbrücke 12 betrieben wird, außerhalb des menschlichen Hörbereichs liegen, z.B. $f_{min}>20kHz$. In der vorliegenden Ausführungsform der erfindungsgemäßen Schaltungsanordnung liegt die mittlere Betriebsfrequenz der zweiten Halbbrücke 12 bei etwa 65kHz, die minimale Betriebsfrequenz bei etwa 25 kHz.

Die Eingangsgleichspannung $U_0$ ist bei üblichen Schaltungstopologien eine Zwischenkreisspannung, die von einem vorgeschalteten Spannungswandler oder einer vorgeschalteten Leistungsfaktorkorrekturschaltung auf ein konstantes Spannungsniveau geregelt wird. In einer bevorzugten Ausführungsform wird die Eingangsgleichspannung $U_0$ auf 400V geregelt. Mit einer Tiefsetzerdrosselauslegung von L1=1,5mH kann damit ein Spannungsbereich von 10V-150V bei einem Strombereich von 0A-0,4A bedient werden.

Die Gasentladungslampe 5 wird also mit einer hochfrequenten Resonanzzündung gestartet, und nach dem elektrischen Durchbruch zunächst mit einem hochfrequenten Lampenstrom betrieben. Diese Betriebsweise wird so lange wie möglich beibehalten. Der Zeitpunkt, zu dem auf einen niederfrequenten Rechteckbetrieb umgeschaltet werden muss, ist von der Lampenspannung abhängig.

Fig. 2 zeigt ein schematisches Diagramm der Betriebsmoden der Vollbrückenanordnung in Abhängigkeit von der Lampenspannung. Die obere Figur zeigt die Betriebsmodi der herkömmlichen Schaltungsanordnungen, die untere die Betriebsmodi für die Schaltungsanordnung gemäß einer Ausführungsform. Ebenso dargestellt ist ein Umschaltbereich 20, in dem ein Wechsel der Betriebsmodi aus Lampensicht stattfinden kann und auch sinnvoll ist. Der Umschaltbereich beginnt bei einer vorbestimmten unteren Lampenspannung $U_{LV}$, und endet bei einer vorbestimmten oberen Lampenspannung $U_{Lkrit}$. Umgeschaltet wird bei der Lampenspannung $U_T$, die zwischen der vorbestimmten unteren Lampenspannung $U_{LV}$ und der vorbestimmten oberen Lampenspannung $U_{Lkrit}$ liegt.

Bei der oberen Figur, die das herkömmliche Verfahren der Eingangs beschriebenen Schaltungsanordnungen darstellt, wird das Hochfahren der Gasentladungslampe 5 nach dem Lampenstart im nichtlückenden Betrieb CCM bewerkstelligt (CCM = Continous Conduction Mode), und zum Umschaltzeitpunkt bei der vorbestimmten unteren Lampenspannung $U_{LV}$ auf den lückenden Betrieb DCM umgeschaltet (DCM = Discontinous Conduction Mode). Der hochfrequente Betrieb HF wird hier wie Eingangs schon erwähnt nur für die Zündung verwendet, und kurz nach Etablierung eines Entladungsbogens wird in den niederfrequenten Rechteckbetrieb im nichtlückenden Betriebsmodus CCM umgeschaltet.

Die untere Figur zeigt ein Betriebsverfahren, gemäß verschiedenen Ausführungsbeispielen wie es die Schaltungsanordnung gemäß verschiedenen Ausführungsbeispielen ausführt. Hier wird der hochfrequente Betriebsmodus HF so lange wie möglich aufrechterhalten. Der hochfrequente Betriebsmodus HF kann nur bis zu der vorbestimmten oberen Lampenspannung $U_{Lkrit}$ aufrechterhalten werden, da ab dieser vorbestimmten oberen Lampenspannung $U_{Lkrit}$ (Die Lampenspannung korreliert direkt mit der Temperatur des Gasentladungslampenbrenners) akustische Resonanzen im Gasentladungslampenbrenner auftreten können, die Flickern verursachen und im schlimmsten Fall zum Verlöschen der Gasentladungslampe führen können. Wie schon erwähnt, ist die Lampenspannung direkt abhängig vom Druck im Entladungsgefäß des Gasentladungslampenbrenners. Je größer der Druck im Gasentladungslampenbrenner, desto größer ist auch die Kontraktion des Entladungsbogens. Je kontrahierter der Entladungsbogen ist, umso anfälliger ist er im Bezug auf akustische Resonanzen im Gasentladungslampenbrenner. Die Anfälligkeit für akustische Resonanzen hängt also direkt mit dem Druck im Gasentladungslampenbrenner, und somit auch direkt mit der Brennspannung der Gasentladungslampe zusammen. Dadurch gibt es eine Grenze in Form der vorbestimmten oberen Lampenspannung $U_{Lkrit}$, ab der ein hochfrequenter Betrieb der Gasentladungslampe kritisch wird. Die vorbestimmte obere Lampenspannung $U_{Lkrit}$ kann je nach Lampentyp zwischen 20V und 60V betragen, bei den gängigen Lampentypen bewegt sie sich im Bereich zwischen 30V und 50V. Dies ist zum Beispiel für gängige Hochdruckentladungslampen mit Nennleistungen von 20W, 35W, 70W und 150W gültig. Die genaue Spannung ist vom Lampentyp und der Geometrie abhängig. Quarzglaslampen werden andere vorbestimmte obere Lampenspannungen $U_{Lkrit}$ als Keramiklampen aufweisen.

Ab der vorbestimmten unteren Lampenspannung $U_{Lv}$ kann auf den niederfrequenten Rechteckbetrieb im lückenden Betrieb umgeschaltet werden. Die vorbestimmte untere Lampenspannung $U_{Lv}$, ab der ein niederfrequenter lückender Betrieb möglich ist, kann durch folgende Beziehung berechnet werden:

$$U_{Lv} = \frac{I_L \cdot 2 \cdot L_l \cdot f_{min}}{1 - D}$$

. D ist hierbei das Tastverhältnis der Vollbrückenanordnung im tiefsetzenden Betrieb, und kann auch durch den Quotienten aus Lampenspannung $U_L$ und Eingangsgleichspannung $U_0$ beschrieben werden: $D = U_L/U_0$. Wenn bei einer Lampenspannung zwischen der vorbestimmten unteren Lampenspannung $U_{LV}$ und der vorbestimmten oberen Lampenspannung $U_{Lkrit}$ vom hochfrequenten Betrieb in den tiefsetzenden niederfrequenten Rechteckbetrieb umgeschaltet wird, kann die Vollbrücke direkt im lückenden Betrieb gefahren werden. Durch diese erfindungsgemäße Betriebsweise ist eine völlig andere Dimensionierung der betroffenen Bauteile möglich. Die Bauteile können wesentlich kleiner dimensioniert werden und müssen weniger robust ausgelegt werden, was Kosten spart und eine Miniaturisierung möglich macht. Die Schaltungsanordnung gemäß verschiedenen Ausführungsbeispielen kann dadurch deutlich kleiner werden, als bekannte herkömmliche Schaltungsanordnungen.

Um den Umschaltzeitpunkt bestimmen zu können, sollte der Schaltungsanordnung die aktuelle Lampenspannung bekannt sein. Für die erfindungsgemäße Schaltungsanordnung gemäß verschiedenen Ausführungsbeispielen gibt es beispielsweise zwei Möglichkeiten: Eine erste Möglichkeit besteht im Messen der Lampenspannung im Hochfrequenzbetrieb. Dazu sind aber recht aufwändige Messglieder notwendig, die auf die Betriebsfrequenz abgestimmt sein sollten.

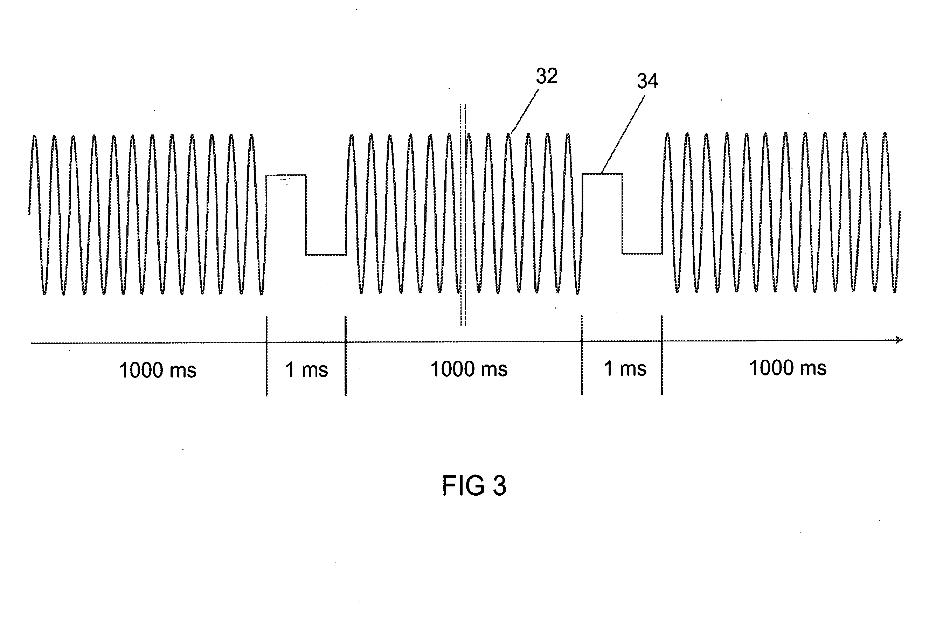

Eine zweite Möglichkeit der Lampenspannungsmessung ist in Fig. 3 dargestellt. Diese Figur zeigt ein Lampenspannungsdiagramm über der Zeit zum Messen der Lampenspannung im Gleichspannungsbetrieb. Dazu wird in regelmäßigen Abständen, z.B. jede Sekunde, vom Hochfrequenzbetrieb 32 für eine sehr kurze Zeit von z.B. einer ms in einen niederfrequenten Rechteckbetrieb mit einer Gleichspannungsphase 34 umgeschaltet. Während dieser Zeit wird eine Lampenspannungsmessung durchgeführt, um danach wieder in den Hochfrequenzbetrieb 32 umzuschalten. Die Lampenspannungsmessung während der Gleichspannungsphase 34 birgt den Vorteil einer einfacheren und genaueren Messung, da die Spannung direkt über einfache Messglieder abgegriffen werden kann. Während der kurzen Gleichspannungsphasen 34 muss die Vollbrücke in den nichtlückenden Betrieb geschaltet werden. Da diese Phase mit 1ms aber sehr kurz ist, ist diese Betriebsweise auch mit der ,kleinen' Dimensionierung der Bauteile für den lückenden Betrieb möglich. Wie in der Figur gut zu sehen ist, wird in der Gleichspannungsphase 34 immer eine ganze Vollwelle durchlaufen. Dies geschieht, um die Elektroden der Gasentladungslampe 5 gleichmäßig zu belasten.

**Patentansprüche**

1. Schaltungsanordnung zum Betreiben einer Entladungslampe (5) aufweisend eine Vollbrückenanordnung (1), die die Entladungslampe (5) speist, wobei die Schaltungsanordnung eingerichtet ist, die Entladungslampe (5) mit einer niederfrequenten und einer hochfrequenten Spannung zu betreiben, und die Schaltungsanordnung dazu ausgebildet ist:

   - die Entladungslampe (5) direkt nach dem Lampenstart mit der hochfrequenten Spannung zu betreiben, und
   - die Entladungslampe (5) oberhalb einer vorbestimmten Lampenspannung ($U_T$) mit der niederfrequenten Spannung zu betreiben,
   - wobei die Vollbrückenanordnung (1) dabei immer im lückenden Betrieb arbeitet, **dadurch gekennzeichnet, dass**
   - die hochfrequente Spannung derart in der Frequenz geregelt wird, dass sich ein vorbestimmter Lampenstrom ($I_L$) durch die Entladungslampe (5) einstellt,
   - wobei die an die Entladungslampe (5) abgegebene Leistung ($P_L$) kleiner oder gleich einer Nennleistung ($P_{Nenn}$) der Entladungslampe (5) ist,
   - wobei die minimale Frequenz der hochfrequenten Spannung ($f_{min}$) außerhalb des menschlichen Hörbereiches liegt.

2. Schaltungsanordnung nach Anspruch 1, **dadurch gekennzeichnet, dass** die Schaltungsanordnung dazu ausgebildet ist, den Lampenstrom $I_L$ im Hochlauf auf folgende Beziehung einzustellen: $1,0*I_{Nenn}<I_L<2,0*I_{Nem}$, wobei $I_{Nenn}$ der Lampenstrom im Nennbetrieb, also im eingeschwungenen Zustand bei Nennleistung der Gasentladungslampe (5) ist.

3. Schaltungsanordnung nach Anspruch 2, **dadurch gekennzeichnet, dass** die Schaltungsanordnung dazu ausgebildet ist, den Lampenstrom $I_L$ im Hochlauf folgende Beziehung einzustellen: $1,3*I_{Nenn}<I_L<1,8*I_{Nenn}$

4. Schaltungsanordnung nach einem der vorhergehenden Ansprüche 1 bis 3, **dadurch gekennzeichnet, dass** die vorbestimmte Lampenspannung ($U_T$) zwischen einer vorbestimmten unteren Lampenspannung ($U_{Lv}$) und einer vorbestimmten oberen Lampenspannung ($U_{Lkrit}$) liegt.

5. Schaltungsanordnung nach Anspruch 4, **dadurch gekennzeichnet, dass** die Schaltungsanordnung dazu ausgebildet ist, die vorbestimmte untere Lampenspannung $U_{Lv}$ gemäß folgender Beziehung zu berechnen: $$U_{Lv} = \frac{I_L \cdot 2 \cdot L_1 \cdot f_{min}}{1-D}$$ , wobei $L_1$ der Induktivitätswert einer Tiefsetzerdrossel der Vollbrückenanordnung ist, D das Tastverhältnis der Vollbrückenanordnung im tiefsetzenden Betrieb ist, sowie $f_{min}$ die minimale Frequenz des tiefsetzenden Betriebes ist.

6. Schaltungsanordnung nach einem der Ansprüche 4 oder 5, **dadurch gekennzeichnet, dass** die vorbestimmte oberen Lampenspannung ($U_{Lkrit}$) zwischen 20V und 60V, besonders bevorzugt zwischen 30V und 50V beträgt.

7. Schaltungsanordnung nach einem der vorhergehenden Ansprüche, **dadurch gekennzeichnet, dass** die Schaltungsanordnung ausgebildet ist, die Lampenspannung direkt im hochfrequenten Betrieb zu messen.

8. Schaltungsanordnung nach einem der vorhergehenden Ansprüche 1 bis 6, **dadurch gekennzeichnet, dass** die Schaltungsanordnung ausgebildet ist, die Lampenspannung in einer kurzen periodischen niederfrequenten Phase zu messen, die in die hochfrequente Betriebsphase eingefügt wird.

9. Verfahren zum Betreiben einer Entladungslampe mit einer Schaltungsanordnung, die eine Vollbrückenanordnung (1) zum Speisen einer Entladungslampe (5) aufweist, wobei die Schaltungsanordnung (1) die Entladungslampe (5) mit einer niederfrequenten und einer hochfrequenten Spannung betreibt, und:

   - die Entladungslampe (5) direkt nach dem Lampenstart mit der hochfrequenten Spannung betrieben wird, und
   - die Entladungslampe (5) oberhalb einer vorbestimmten Lampenspannung ($U_T$) mit der niederfrequenten Spannung betrieben wird,
   - wobei die Vollbrückenanordnung (1) dabei immer im lückenden Betrieb arbeitet, **dadurch gekennzeichnet, dass**
   - die hochfrequente Spannung derart in der Frequenz geregelt wird, dass sich ein vorbestimmter Lampenstrom ($I_L$) durch die Entladungslampe (5) einstellt,
   - wobei die an die Entladungslampe (5) abgegebene Leistung ($P_L$) kleiner oder gleich einer Nennleistung ($P_{Nenn}$) der Entladungslampe (5) ist,
   - wobei die minimale Frequenz der hochfrequenten Spannung ($f_{min}$) außerhalb des menschlichen Hörbereiches liegt.

10. Verfahren nach Anspruch 9, **dadurch gekennzeichnet, dass** die vorbestimmte Lampenspannung

$(U_T)$ zwischen einer vorbestimmten unteren Lampenspannung $(U_{Lv})$ und einer vorbestimmten oberen Lampenspannung $(U_{Lkrit})$ liegt.

11. Verfahren nach einem der Ansprüche 9 oder 10, **dadurch gekennzeichnet, dass** die vorbestimmte untere Lampenspannung $U_{Lv}$ durch folgende Beziehung berechnet wird :

$$U_{Lv} = \frac{I_L \cdot 2 \cdot L_1 \cdot f_{min}}{1 - D} ,$$

wobei $L_1$ der Induktivitätswert einer Tiefsetzerdrossel der Vollbrückenanordnung ist, D das Tastverhältnis der Vollbrückenanordnung im tiefsetzenden Betrieb ist, sowie $f_{min}$ die minimale Frequenz des tiefsetzenden Betriebes ist.

12. Verfahren nach einem der Ansprüche 9 bis 11, **dadurch gekennzeichnet, dass** die vorbestimmten oberen Lampenspannung $(U_{Lkrit})$ zwischen 20V und 60V, besonders bevorzugt zwischen 30V und 50V beträgt.

**Claims**

1. Circuit arrangement for operating a discharge lamp (5) having a full-bridge arrangement (1), which feeds the discharge lamp (5), wherein the circuit arrangement is designed to operate the discharge lamp (5) on a low-frequency or a high-frequency voltage, and the circuit arrangement is designed:

   - to operate the discharge lamp (5) directly after lamp starting on the high-frequency voltage, and
   - to operate the discharge lamp (5) above a predetermined lamp voltage $(U_T)$ on the low-frequency voltage,
   - wherein the full-bridge arrangement (1) in this case always operates in the intermittent operating mode, **characterized in that**
   - the high-frequency voltage is regulated in terms of frequency in such a way that a predetermined lamp current $(I_L)$ through the discharge lamp (5) is set,
   - wherein the power $(P_L)$ output to the discharge lamp (5) is less than or equal to a rated power $(P_{rated})$ of the discharge lamp (5),
   - wherein the minimum frequency of the high-frequency voltage $(f_{min})$ is outside the human audible range.

2. Circuit arrangement according to Claim 1, **characterized in that** the circuit arrangement is designed to set the lamp current $(I_L)$ during runup to the following relationship: $1, 0*I_{rated} < I_L < 2. 0*I_{rated}$, where $I_{rated}$ is the lamp current during rated operation, i.e. in the settled state at the rated power of the gas discharge lamp (5).

3. Circuit arrangement according to Claim 2, **characterized in that** the circuit arrangement is designed to set the lamp current $(I_L)$ during runup to the following relationship: $1.3*I_{rated} < I_L < 1.8*I_{rated}$.

4. Circuit arrangement according to one of the preceding Claims 1 to 3, **characterized in that** the predetermined lamp voltage $(U_T)$ is between a predetermined lower lamp voltage $(U_{Lv})$ and a predetermined higher lamp voltage $(U_{Lcrit})$ .

5. Circuit arrangement according to Claim 4, **characterized in that** the circuit arrangement is designed to calculate the predetermined lower lamp voltage $(U_{Lv})$ in accordance with the following relationship:

$$U_{Lv} = \frac{I_L \cdot 2 \cdot L_1 \cdot f_{min}}{1 - D} ,$$ where $L_1$ is

the inductance value of a step-down converter inductor of the full-bridge arrangement, D is the duty factor of the full-bridge arrangement in the step-down operating mode, and $f_{min}$ is the minimum frequency of the step-down operating mode.

6. Circuit arrangement according to either of Claims 4 and 5, **characterized in that** the predetermined higher lamp voltage $(U_{Lcrit})$ is between 20 V and 60 V, particularly preferably between 30 V and 50 V.

7. Circuit arrangement according to one of the preceding claims, **characterized in that** the circuit arrangement is designed to measure the lamp voltage directly in the high-frequency operating mode.

8. Circuit arrangement according to one of the preceding Claims 1 to 6, **characterized in that** the circuit arrangement is designed to measure the lamp voltage in a short periodic low-frequency phase, which is inserted into the high-frequency operating phase.

9. Method for operating a discharge lamp comprising a circuit arrangement which has a full-bridge arrangement (1) for feeding a discharge lamp (5), wherein the circuit arrangement (1) operates the discharge lamp (5) on a low-frequency and a high-frequency voltage, and:

   - the discharge lamp (5) is operated directly after lamp starting on the high-frequency voltage, and
   - the discharge lamp (5) is operated above a predetermined lamp voltage $(U_T)$ on the low-frequency voltage,
   - wherein the full-bridge arrangement (1) in this case always operates in the intermittent operating mode, **characterized in that**

- the high-frequency voltage is regulated in terms of frequency in such a way that a predetermined lamp current ($I_L$) through the discharge lamp (5) is set,
- wherein the power ($P_L$) output to the discharge lamp (5) is less than or equal to a rated power (pirated) of the discharge lamp (5),
- wherein the minimum frequency of the high-frequency voltage ($f_{min}$) is outside the human audible range.

10. Method according to Claim 9, **characterized in that** the predetermined lamp voltage ($U_T$) is between a predetermined lower lamp voltage ($U_{Lv}$) and a predetermined higher lamp voltage ($U_{Lcrit}$).

11. Method according to either of Claims 9 and 10, **characterized in that** the predetermined lower lamp voltage ($U_{Lv}$) is calculated by the following relationship:

$$U_{Lv} = \frac{I_L \cdot 2 \cdot L_1 \cdot f_{min}}{1 - D}$$ , where $L_1$ is

the inductance value of a step-down converter inductor of the full-bridge arrangement, D is the duty factor of the full-bridge arrangement in the step-down operating mode, and $f_{min}$ is the minimum frequency of the step-down operating mode.

12. Method according to one of Claims 9 to 11, **characterized in that** the predetermined higher lamp voltage ($U_{Lcrit}$) is between 20 V and 60 V, particularly preferably between 30 V and 50 V.

**Revendications**

1. Circuit permettant de faire fonctionner une lampe à décharge (5), présentant un montage en pont complet (1) qui alimente la lampe à décharge (5), ledit circuit étant adapté pour faire fonctionner la lampe à décharge (5) avec une tension basse fréquence et une tension haute fréquence, et ledit circuit étant configuré :

     - pour faire fonctionner la lampe à décharge (5), immédiatement après l'allumage de la lampe, avec la tension haute fréquence, et
     - pour faire fonctionner la lampe à décharge (5), au-dessus d'une tension de lampe prédéterminée ($U_T$), avec la tension basse fréquence,
     - le montage en pont complet (1) fonctionnant alors toujours en mode discontinu, **caractérisé en ce que**
     - la fréquence de la tension haute fréquence est réglée de façon à obtenir un courant de lampe prédéterminé (IL) traversant la lampe à décharge (5),
     - la puissance ($P_L$) fournie à la lampe à décharge (5) étant inférieure ou égale à une puissance nominale ($P_{Nenn}$) de la lampe à décharge (5),
     - la fréquence minimale de la tension haute fréquence ($f_{min}$) étant située en dehors de la gamme audible pour l'homme.

2. Circuit selon la revendication 1, **caractérisé en ce que** le circuit est configuré pour régler le courant de lampe IL au démarrage sur la relation suivante : 1, 0*$I_{Nenn}$<$I_L$<2, 0*$I_{Nenn}$, où $I_{Nenn}$ est le courant de lampe en régime nominal, c'est-à-dire en régime stabilisé à la puissance nominale de la lampe à décharge de gaz (5).

3. Circuit selon la revendication 2, **caractérisé en ce que** le circuit est configuré pour régler le courant de lampe IL au démarrage sur la relation suivante : 1, 3*$I_{Nenn}$<$I_L$<1, 8*$I_{Nenn}$.

4. Circuit selon l'une des revendications précédentes 1 à 3, **caractérisé en ce que** la tension de lampe prédéterminée ($U_T$) est située entre une tension de lampe prédéterminée basse ($U_{Lv}$) et une tension de lampe prédéterminée haute ($U_{Lkrit}$).

5. Circuit selon la revendication 4, **caractérisé en ce que** le circuit est configuré pour calculer la tension de lampe prédéterminée basse ($U_{Lv}$) selon la relation suivante : $$U_{Lv} = \frac{I_L \cdot 2 \cdot L_1 \cdot f_{min}}{1 - D}$$ ,

où $L_1$ est la valeur d'inductance d'un self abaisseur de tension du montage en pont complet, D est le rapport cyclique du montage en pont complet en régime abaisseur de tension, et $f_{min}$ est la fréquence minimale du régime abaisseur de tension.

6. Circuit selon l'une des revendications 4 ou 5, **caractérisé en ce que** la tension de lampe prédéterminée haute ($U_{Lkrit}$) est comprise entre 20V et 60V, de préférence entre 30V et 50V.

7. Circuit selon l'une des revendications précédentes, **caractérisé en ce que** le circuit est configuré pour mesurer la tension de lampe directement en fonctionnement haute fréquence.

8. Circuit selon l'une des revendications précédentes 1 à 6, **caractérisé en ce que** le circuit est configuré pour mesurer la tension de lampe dans une courte phase périodique à basse fréquence, insérée dans la phase de fonctionnement à haute fréquence.

9. Procédé permettant de faire fonctionner une lampe à décharge au moyen d'un circuit comprenant un montage en pont complet (1) pour alimenter une lampe à décharge (5), dans lequel ledit circuit (1) fait fonctionner la lampe à décharge (5) avec une tension basse fréquence et une tension haute fréquence, et dans lequel :

- la lampe à décharge (5) est alimentée, immédiatement après l'allumage de la lampe, avec la tension haute fréquence, et
- la lampe à décharge (5) est alimentée, au-dessus d'une tension de lampe prédéterminée ($U_T$), avec la tension basse fréquence,
- le montage en pont complet (1) fonctionnant alors toujours en mode discontinu, **caractérisé en ce que**
- la fréquence de la tension haute fréquence est réglée de façon à obtenir un courant de lampe prédéterminée ($I_L$) traversant la lampe à décharge (5),
- la puissance ($P_L$) fournie à la lampe à décharge (5) étant inférieure ou égale à une puissance nominale ($P_{Nenn}$) de la lampe à décharge (5),
- la fréquence minimale de la tension haute fréquence ($f_{min}$) étant située en dehors de la gamme audible pour l'homme.

10. Procédé selon la revendication 9, **caractérisé en ce que** la tension de lampe prédéterminée ($U_T$) est située entre une tension de lampe prédéterminée basse ($U_{Lv}$) et une tension de lampe prédéterminée haute ($U_{Lkrit}$).

11. Procédé selon l'une des revendications 9 ou 10, **caractérisé en ce que** la tension de lampe prédéterminée basse ($U_{Lv}$) est calculée par la relation suivante :

$$U_{Lv} = \frac{I_L \cdot 2 \cdot L_1 \cdot f_{min}}{1 - D} \ ,$$

où $L_1$ est la valeur d'inductance d'un self abaisseur de tension du montage en pont complet, D est le rapport cyclique du montage en pont complet en régime abaisseur de tension, et $f_{min}$ est la fréquence minimale du régime abaisseur de tension.

12. Procédé selon l'une des revendications 9 à 11, **caractérisé en ce que** la tension de lampe prédéterminée haute ($U_{Lkrit}$) est comprise entre 20V et 60V, de préférence entre 30V et 50V.

FIG 1

FIG 2

FIG 3

EP 2 505 040 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008015645 A1
- US 20010020830 A1
- US 6020691 A